# EUROPEAN PATENT APPLICATION

(11) **EP 4 852 551 A1**
(43) Date of publication of application: **09.12.2026**
(21) Application number: 24939188.9
(22) Date of filing: 23.05.2024
(51) Int. Cl.: H04W 68/02, H04W 52/02

(54) **WIRELESS COMMUNICATION METHOD, TERMINAL DEVICE AND NETWORK DEVICE**

(71) Applicant: Quectel Wireless Solutions Co., Ltd., Shanghai 201601 (CN)
(72) Inventor: LYU, Ling, Shanghai 201601 (CN); ZHAO, Zheng, Shanghai 201601 (CN)
(74) Representative: Shieldmark
(86) International application number: PCT/CN2024/094975
(87) International publication number: WO 2025/241152

(57) **Abstract**

A method and apparatus for wireless communication are provided. The method includes: determining, by a terminal device based on first information, one or more POs corresponding to the terminal device in a first cycle, where the first information includes one or more of following information: a type of a PO in the first cycle; a type of the terminal device; a type of a PEI received by the terminal device; and whether PFs in the first cycle are consecutive.

## Description

### TECHNICAL FIELD

The present application relates to the field of communications technologies, and more specifically, to a method for wireless communication, a terminal device, and a network device.

### BACKGROUND

In order to save network energy, a network energy saving (network energy save, NES) function is introduced in some communication systems. In a cell that supports NES configuration, the network device may send a system information block (system information block, SIB) on demand. However, a terminal device in the cell may or may not support the NES function. In this scenario, how to design a paging mechanism to reduce energy consumption becomes a technical problem that needs to be solved.

### SUMMARY

The present application provides a method for wireless communication, a terminal device, and a network device. Various aspects of embodiments of the present application are described below.

According to a first aspect, a method for wireless communication is provided, including: determining, by a terminal device based on first information, one or more paging occasions (paging occasion, PO) corresponding to the terminal device in a first cycle, where the first information includes one or more of following information: a type of a PO in the first cycle; a type of the terminal device; a type of a paging early indication (paging early indication, PEI) received by the terminal device; and whether paging frames (paging frame, PF) in the first cycle are consecutive.

According to a second aspect, a method for wireless communication is provided, including: determining, by a network device based on first information, one or more POs corresponding to a terminal device in a first cycle, where the first information includes one or more of following information: a type of a PO in the first cycle; a type of the terminal device; a type of a PEI sent to the terminal device; and whether PFs in the first cycle are consecutive.

According to a third aspect, a terminal device is provided, where the terminal device includes: a determining unit, determining, based on first information, one or more POs corresponding to the terminal device in a first cycle, where the first information includes one or more of following information: a type of a PO in the first cycle; a type of the terminal device; a type of a PEI received by the terminal device; and whether PFs in the first cycle are consecutive.

According to a fourth aspect, a network device is provided, where the network device includes: a determining unit, determining, based on first information, one or more POs corresponding to a terminal device in a first cycle, where the first information includes one or more of following information: a type of a PO in the first cycle; a type of the terminal device; a type of a PEI sent to the terminal device; and whether PFs in the first cycle are consecutive.

According to a fifth aspect, a communication apparatus is provided, including a memory and a processor. The memory is configured to store a program, and the processor is configured to invoke the program in the memory to execute a method according to the first aspect or the second aspect.

According to a sixth aspect, an apparatus is provided, including a processor, invoking a program from a memory to execute a method according to the first aspect or the second aspect.

According to a seventh aspect, a chip is provided, including a processor, invoking a program from a memory, to cause a device on which the chip is installed to execute a method according to the first aspect or the second aspect.

According to an eighth aspect, a computer-readable storage medium is provided, where the computer-readable storage medium stores a program, and the program causes a computer to execute a method according to the first aspect or the second aspect.

According to a ninth aspect, a computer program product is provided, including a program, where the program causes a computer to execute a method according to the first aspect or the second aspect.

According to a tenth aspect, a computer program is provided, where the computer program causes a computer to execute a method according to the first aspect or the second aspect.

A terminal device in embodiments of the present application may determine, based on first information, one or more POs corresponding to the terminal device in a first cycle. When the first information includes a type of the PO, a type of the terminal device, and/or a type of a PEI, terminal devices of different types may separately perform paging detection on different POs, to reduce energy consumption. When the first information indicates that PFs in the first cycle are consecutive, a network device and the terminal device may send and detect a paging message only in a time period with consecutive PFs. This helps reduce energy consumption of the terminal device and the network device.

### BRIEF DESCRIPTION OF THE DRAWINGS

FIG. 1 shows a wireless communication system to which embodiments of the present application are applied.
FIG. 2 is a schematic flowchart of a method for wireless communication according to an embodiment of the present application.
FIG. 3 is a schematic diagram of a possible implementation of the method shown in FIG. 2.
FIG. 4 is a schematic diagram of another possible implementation of the method shown in FIG. 2.
FIG. 5 is a schematic diagram of still another possible implementation of the method shown in FIG. 2.
FIG. 6 is a schematic flowchart of another method for wireless communication according to an embodiment of the present application.
FIG. 7 is a schematic diagram of a structure of a terminal device according to an embodiment of the present application.
FIG. 8 is a schematic diagram of a structure of a network device according to an embodiment of the present application.
FIG. 9 is a schematic diagram of a structure of a communication apparatus according to an embodiment of the present application.

### DETAILED DESCRIPTION OF THE EMBODIMENTS

The following describes the technical solutions in embodiments of the present application with reference to the accompanying drawings in embodiments of the present application. Apparently, the described embodiments are some rather than all of embodiments of the present application. For embodiments of the present application, all other embodiments obtained by a person of ordinary skill in the art without creative efforts fall within the protection scope of the present application.

Embodiments of the present application may be applied to various communication systems. For example, embodiments of the present application may be applied to a global system for mobile communications (global system of mobile communication, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an advanced long term evolution (advanced long term evolution, LTE-A) system, a new radio (new radio, NR) system, an evolved system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, a universal mobile telecommunication system (universal mobile telecommunication system, UMTS), a wireless local area network (wireless local area networks, WLAN) system, a wireless fidelity (wireless fidelity, WiFi) system, and a 5th-generation (5th-generation, 5G) communication system. Embodiments of the present application may be further applied to another communication system, for example, a future communication system such as a 6th-generation (6th-generation, 6G) mobile communication system or a satellite (satellite) communication system.

Conventional communication systems support a limited quantity of connections and are easy to implement. However, with development of communication technologies, a communication system may support not only conventional cellular communication but also one or more other types of communications. For example, the communication system may support one or more types of the following communications: device-to-device (device to device, D2D) communication, machine-to-machine (machine to machine, M2M) communication, machine type communication (machine type communication, MTC), enhanced machine type communication (enhanced MTC, eMTC), vehicle-to-vehicle (vehicle to vehicle, V2V) communication, vehicle-to-everything (vehicle to everything, V2X) communication, and the like. Embodiments of the present application may also be applied to a communication system that supports the foregoing communication manners.

The communication system in embodiments of the present application may be applied to a carrier aggregation (carrier aggregation, CA) scenario, a dual connectivity (dual connectivity, DC) scenario, or a standalone (standalone, SA) networking scenario.

The communication system in embodiments of the present application may be applied to an unlicensed spectrum. The unlicensed spectrum may also be considered as a shared spectrum. Alternatively, the communication system in embodiments of the present application may be applied to a licensed spectrum. The licensed spectrum may also be considered as a dedicated spectrum.

Embodiments of the present application may be applied to a non-terrestrial network (non-terrestrial network, NTN) system. In an example, the NTN system may be a 4G-based NTN system, an NR-based NTN system, an NTN system based on an internet of things (internet of things, IoT), or an NTN system based on a narrow band internet of things (narrow band internet of things, NB-IoT).

The communication system may include one or more terminal devices. The terminal device in embodiments of the present application may also be referred to as user equipment (user equipment, UE), an access terminal, a subscriber unit, a subscriber station, a mobile site, a mobile station (mobile station, MS), a mobile terminal (mobile Terminal, MT), a remote station, a remote terminal, a mobile device, a user terminal, a terminal, a wireless communication device, a user agent, a user apparatus, or the like.

In some embodiments, the terminal device may be a station (STATION, ST) in a WLAN. In some embodiments, the terminal device may be a cellular phone, a cordless phone, a session initiation protocol (session initiation protocol, SIP) phone, a wireless local loop (wireless local loop, WLL) station, a personal digital assistant (personal digital assistant, PDA) device, a handheld device with a wireless communication function, a computing device, or another processing device connected to a wireless modem, a vehicle-mounted device, a wearable device, a terminal device in a next-generation communication system (such as an NR system), a terminal device in a future evolved public land mobile network (public land mobile network, PLMN), or the like.

In some embodiments, the terminal device may be a device that provides a user with voice and/or data connectivity. For example, the terminal device may be a handheld device, a vehicle-mounted device, or the like that has a wireless connection function. In some specific examples, the terminal device may be a mobile phone (mobile phone), a Pad (Pad), a notebook computer, a laptop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like.

In some embodiments, the terminal device may be deployed on land. For example, the terminal device may be deployed indoors or outdoors. In some embodiments, the terminal device may be deployed on water, for example, on a ship. In some embodiments, the terminal device may be deployed in the air, for example, on an airplane, a balloon, and a satellite.

In addition to the terminal device, the communication system may further include one or more network devices. The network device in embodiments of the present application may be a device for communicating with the terminal device. The network device may also be referred to as an access network device or a radio access network device. The network device may be, for example, a base station. The network device in embodiments of the present application may be a radio access network (radio access network, RAN) node (or device) that connects the terminal device to a wireless network. The base station may broadly cover following various names, or may be replaced with the following names: a NodeB (NodeB), an evolved NodeB (evolved NodeB, eNB), a next generation NodeB (next generation NodeB, gNB), a relay station, a transmitting and receiving point (transmitting and receiving point, TRP), a transmitting point (transmitting point, TP), a master eNodeB (MeNB), a secondary eNodeB (SeNB), a multi-standard radio (MSR) node, a home base station, a network controller, an access node, a wireless node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communication module, a modem, or a chip disposed in the device or the apparatus described above. Alternatively, the base station may be a mobile switching center, a device that functions as a base station in D2D, V2X, or M2M communication, a network-side device in a 6G network, a device that functions as a base station in a future communication system, or the like. The base station may support networks with a same access technology or different access technologies. A specific technology and a specific device used by the network device are not limited in embodiments of the present application.

The base station may be fixed or mobile. For example, a helicopter or an uncrewed aerial vehicle may be configured to function as a mobile base station, and one or more cells may move according to a location of the mobile base station. In another example, a helicopter or an uncrewed aerial vehicle may be configured to function as a device in communication with another base station.

In some deployments, the network device in embodiments of the present application may be a CU or a DU, or the network device includes a CU and a DU. The gNB may further include an AAU.

As an example rather than limitation, in embodiments of the present application, the network device may have a mobile characteristic, for example, the network device may be a movable device. In some embodiments of the present application, the network device may be a satellite or a balloon station. In some embodiments of the present application, the network device may alternatively be a base station arranged on land, water, or the like.

In embodiments of the present application, the network device may provide a service for a cell. The terminal device communicates with the network device by using a transmission resource (for example, a frequency resource or a spectrum resource) used by the cell. The cell may be a cell corresponding to the network device (for example, a base station). The cell may belong to a macro station or may belong to a base station corresponding to a small cell (small cell). The small cell herein may include a metro cell (metro cell), a micro cell (micro cell), a pico cell (pico cell), a femto cell (femto cell), or the like. These small cells have characteristics of small coverage and low transmit power, and are suitable for providing a high-rate data transmission service.

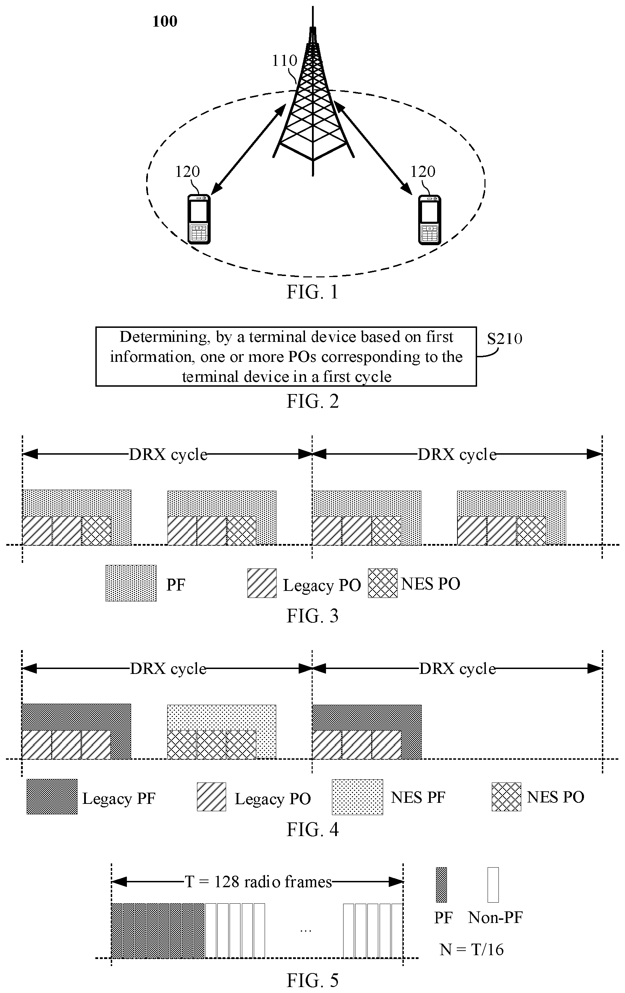

Exemplarily, FIG. 1 is a schematic diagram of an architecture of a communication system according to an embodiment of the present application. As shown in FIG. 1, the communication system 100 may include a network device 110, and the network device 110 may be a device that communicates with a terminal device 120 (or referred to as a communication terminal or a terminal). The network device 110 may provide communication coverage in a specific geographic area, and may communicate with a terminal device located in the coverage area.

FIG. 1 exemplarily shows one network device and two terminal devices. In some embodiments of the present application, the communication system 100 may include a plurality of network devices, and another quantity of terminal devices may be included within coverage of each network device. This is not limited herein.

In embodiments of the present application, the wireless communication system shown in FIG. 1 may further include other network entities such as a mobility management entity (mobility management entity, MME) and an access and mobility management function (access and mobility management function, AMF). This is not limited in embodiments of the present application.

It should be understood that a device having a communication function in a network/system in embodiments of the present application may be referred to as a communication device. The communication system 100 shown in FIG. 1 is used as an example. The communication device may include a network device 110 and a terminal device 120 that have a communication function. The network device 110 and the terminal device 120 may be specific devices described above. Details are not described herein again. The communication device may further include another device in the communication system 100, such as a network controller or a mobility management entity, which is not limited in embodiments of the present application.

For ease of understanding, some relevant technical knowledge related to embodiments of the present application is first described. The following related technologies, as optional solutions, may be randomly combined with the technical solutions of embodiments of the present application, all of which fall within the protection scope of embodiments of the present application. Embodiments of the present application include at least a part of the following content.

With development of mobile communication technologies, a new radio evolved system (for example, a 5G system) improves a transmission rate of data by using a plurality of technologies, to meet a transmission requirement of a large amount of data such as high-definition videos and virtual reality. The plurality of technologies are, for example, a large-scale (multiple-input multiple-output, MIMO) technology, a non-orthogonal multiple access technology, a simultaneous co-frequency full-duplex communication technology, a novel modulation technology, a novel coding technology, and a higher-order modulation technology. With these technologies, a peak rate can reach a Gbit/s-level standard.

In an example, a latency level of an air interface needs to be about 1 ms to meet real-time application such as autonomous driving and telemedicine. In an example, an ultra-large network capacity can provide a connection capability of hundreds of billions of devices, thereby meeting an internet of things communication requirement. In an example, spectral efficiency of an NR system is over 10 times higher than that of an LTE system. With continuous wide area coverage and high mobility, a user-perceived rate can reach 100 Mbit/s. Therefore, traffic density and connection number density are greatly increased.

In addition, improvement of system collaboration and intelligence levels further improves network flexibility. System collaboration can be manifested as multi-user, multi-point, multi-antenna, and multi-intake cooperative networking. Based on collaboration and intelligence, automatic adjustment can be flexibly performed between networks.

However, in a communication system, power consumption of a network device (for example, a base station) is usually high. In order to reduce power consumption of the network device, system information needs to be optimized. For example, the network device usually periodically sends a SIB1 used for initial access, and schedules another SIB of a terminal device in an idle/inactive mode. However, even if there is no demand from the terminal device or no terminal device camps on a cell, the network device always performs transmission, resulting in relatively large power consumption. Due to this reason, in order to save network energy, the 3rd Generation Partnership Project (3rd generation partnership project, 3GPP) has done a lot of research on an on-demand SIB1 for a terminal device in an idle/inactive mode in Release 18 (release 18, R18) and R19, to achieve network energy saving by reducing unnecessary SIB1 transmissions and associated physical random access channel (physical random access channel, PRACH) monitoring.

In some communication systems, an NES function is introduced based on network energy saving requirements. In a cell that supports the NES configuration, the network device may transmit an SSB with a variable cycle and/or send a SIB1 on demand. However, a terminal device in the cell may or may not support the NES function. It may be learned that, due to emergence of NES cells, terminal devices may include legacy terminal devices and terminal devices that support NES configuration. A legacy terminal device may also be referred to as a legacy (legacy) terminal device, and a terminal device that supports NES configuration may also be referred to as a NES terminal device.

In a cell that supports NES configuration, how to design a paging (paging) mechanism is a problem that requires further research. When a network needs to be connected to a terminal device, the network initiates a paging procedure to send a paging message to the terminal device. When the terminal device in an idle mode is in a sleep state in a discontinuous reception (discontinuous reception, DRX) cycle or an extended DRX (extended DRX, eDRX) cycle, the terminal device may periodically wake up to detect whether there is a paging message.

In some scenarios, when a SIB1 in a cell is sent on demand, how to send a paging-related configuration or parameter in the SIB1 needs to be considered. That is, how the paging mechanism should be changed to support transmission of the on-demand SIB1 is a research direction. Further, to better save energy, how to adjust a related paging mechanism based on a conventional technology is also a technical difficulty that needs to be studied.

In some scenarios, a legacy terminal device requires the network device to periodically send a SIB, but a terminal device that supports NES configuration does not need to periodically send a SIB. The paging mechanism needs to be flexibly configured based on different types of terminal devices in a cell. When detection requirements of both the legacy terminal device and the NES terminal device are considered in the paging mechanism, it helps reduce energy consumption. Therefore, how to improve the paging mechanism to be compatible with the legacy terminal device and the NES terminal device so as to reduce power consumption of terminal devices is also one of research objectives.

In some scenarios, how a cell that supports NES configuration sends a paging message to increase dormant time of the cell needs to be considered.

In conclusion, how to design a paging mechanism to save energy consumption in a cell that supports NES configuration becomes a problem needing to be solved.

It should be noted that the foregoing problem that the paging mechanism needs to be compatible with two types of terminal devices due to a difference between the legacy terminal device and the NES terminal device is merely an example. Embodiments of the present application may be applied to a communication scenario in which the paging mechanism needs to be compatible with any plurality of types of terminal devices.

To resolve the foregoing problem, embodiments of the present application propose a method for wireless communication. In this method, a terminal device may determine, based on first information, one or more POs that need to be detected in a first cycle. When the first information is related to a type of the terminal device, a PO, or a PEI, different terminal devices may determine POs corresponding to the first information. After the first information indicates that PFs are set to be consecutive, a network device and the terminal device may perform centralized paging and detection in the consecutive PFs, thereby implementing effective energy saving. For ease of understanding, the following describes in detail a method provided in embodiments of the present application with reference to FIG. 2. The method shown in FIG. 2 is performed by a terminal device.

Refer to FIG. 2. Step S210: Determining, by the terminal device based on first information, one or more POs corresponding to the terminal device in a first cycle.

The terminal device may be terminal devices in different states, which is not limited herein. In an example, the terminal device may be in an idle state or in an inactive state, and needs to detect, in a first cycle, whether there is a corresponding paging message. In an example, the terminal device may be in an active state or a radio resource control (radio resource control, RRC) connected state, and may determine wake-up time and a PF/PO before entering the idle state, to receive a PEI or a paging message in time.

In some embodiments, the terminal device may be a communication device that supports NES configuration, or a communication device that has an NES function. That is, the terminal device may be the NES terminal device described above.

In some embodiments, the terminal device may be a legacy terminal device, or may be referred to as a legacy terminal device.

A serving cell corresponding to the terminal device is a first cell. The terminal device may be connected to a network device corresponding to the first cell. In other words, a cell in which the terminal device is located is the first cell, or the network device corresponding to the first cell may provide a service for the terminal device.

In some embodiments, the first cell may be a cell in which energy saving needs to be implemented on a network side. The cell may be any cell described above. Energy saving that needs to be implemented on the network side may include energy saving of a network device, and may also include energy saving of a core network. Optionally, the first cell may be a NES cell, or may be a network energy saving cell having a similar function.

In an example, for the terminal device in the idle/inactive mode, the first cell that sends a SIB1 on demand is a NES cell.

The network device may be any one of the access network devices described above, or may be a core network device. In some embodiments, the network device may be a communication device that sends a paging message to the terminal device. The terminal device may receive the paging message sent by the network device.

In some embodiments, when there is a paging message corresponding to the terminal device, the network device may determine, based on an identity (identity, ID)) of the terminal device, a PO corresponding to the terminal device, so as to send the paging message. For the terminal device, the terminal device also needs to determine one or more POs corresponding to the terminal device, and detect the paging message on the one or more POs, to reduce unnecessary energy consumption.

For example, the paging occasion (PO) is usually a set of physical downlink control channel (physical downlink control channel, PDCCH) monitoring opportunities and includes a plurality of slots (slot). Therefore, the paging occasion may also be referred to as a paging opportunity.

For example, one PO may include S synchronization signal block (synchronization signal block, SSB) beams, and S may be determined by ssb-PositionsInBurst in a SIB1 message. Paging messages sent on all SSB beams may be completely the same.

In an example, the network device may broadcast a paging message of the terminal device on a corresponding PO. The terminal device may perform detection on the corresponding PO to determine whether there is a paging message of the terminal device.

In an example, after determining one or more POs that require detection, the terminal device may detect the paging message on the one or more POs. In other words, the one or more POs are used by the terminal device to perform paging detection.

The one or more POs determined by the terminal device are POs corresponding to the terminal device. When there is a paging message for the terminal device, the network device sends the paging message on the PO corresponding to the terminal device so that the terminal device can receive the paging message. Therefore, the one or more POs corresponding to the terminal device may also be replaced with one or more POs on which the terminal device needs to perform detection.

In some embodiments, that the terminal device determines the one or more POs means that the terminal device determines a time domain position and/or a frequency domain position of the one or more POs. In an example, a frame in which one or more POs are located may be referred to as a PF. The time domain position of the one or more POs may be determined by using a position parameter of the PF.

In an example, the PF may include a plurality of POs. For example, there are Ns POs in one PF.

In an example, a position of a PO may be replaced with a position of a PF. The terminal device may determine the position of the PO after determining the position of the PF.

In some embodiments, the one or more POs corresponding to the terminal device may be located in one PF, or may be located in a plurality of PFs. The plurality of PFs may be a plurality of PFs in one cycle, or may be a plurality of PFs located in a plurality of cycles, which is not limited herein.

In an example, the terminal device may also perform paging detection on the PF in which the one or more POs corresponding to the terminal device are located. Therefore, the one or more POs corresponding to the terminal device can be replaced with one or more PFs corresponding to the terminal device.

The terminal device needs to determine one or more POs corresponding to the terminal device in the first cycle. In some embodiments, the first cycle may be any one or more cycles related to energy saving. If there is no PO to be detected in the first cycle, the terminal device may remain in a sleep state to save energy. For example, the first cycle may be one or more DRX cycles of the terminal device. For another example, the first cycle may be one or more eDRX cycles. In some embodiments, the first cycle may be one or more paging cycles, so that the terminal device periodically perform detection on the paging message.

In an example, the first cycle may be one DRX cycle. After determining one or more POs corresponding to the terminal device in the DXR cycle, the terminal device may wake up before the PO to detect a paging message in the PO.

In an example, the first cycle may be a plurality of DRX cycles. The terminal device may better perform, in an idle state or in an inactive mode, detection on the paging message based on one or more POs corresponding to the terminal device in the plurality of DRX cycles.

In an example, the first cycle may be one paging cycle. The paging cycle may be a default paging cycle configured by a higher layer, or may be a specific DRX cycle of the terminal device. For example, Paging cycle T = min (Default paging cycle, UE-specific DRX cycle).

In an example, the first cycle may be a plurality of default paging cycles.

In an example, the first cycle may include one PF or a plurality of PFs of a specified quantity.

In an example, the first cycle may be a specified time period. The time period may be a time period configured based on the NES function or a similar function.

In an example, the first cycle may be any time period configured by a higher layer, which is not limited herein.

In some embodiments, a position of the one or more POs corresponding to the terminal device in the first cycle may be determined based on a configuration parameter of the first cycle and an ID (*UE_{ID}*) of the terminal device. For example, a position of a PO corresponding to any UE in a PF may be: *iₛ* = *floor*(*UE_{ID}*/*N*) mod *Nₛ*.

In an example, for a NES terminal device, a position of a corresponding PO in the first cycle or any PF within the first cycle may be expressed as *i_{s,NES}.*

In an example, a position of a PO in the first cycle may be expressed as a position of the PO in a PF. The position may be represented by an index value.

In an example, the position *i_{s,NES}* of the PO in the first cycle may indicate a start position of a set of PDCCH monitoring opportunities, and the NES terminal device may continuously receive paging messages starting from an *i_{s,NES}* th PO.

The terminal device may determine, based on the first information, the one or more POs corresponding to the terminal device in the first cycle. In some embodiments, the terminal device may determine the first information in a plurality of manners. For example, the first information may come from the network device. For another example, the first information may be information of the terminal device. For another example, the first information may be determined based on a PEI or other similar indication information received by the network device. For another example, the first information may be determined based on configuration information of a higher layer.

In some embodiments, the first information may be carried in one or more of the following information: a SIB, an RRC, and downlink control information (downlink control information, DCI).

In some embodiments, the first information may include one or more of the following information: a type of a PO in the first cycle; a type of the terminal device; a type of a PEI received by the terminal device/a type of a PEI sent by the network device to the terminal device; and whether PFs in the first cycle are consecutive. In other words, the terminal device may determine one or more corresponding POs based on any one or a combination of a plurality of pieces of the information above.

It should be noted that the terminal device may determine, based on a combination of the first information and any other information, one or more POs corresponding to the terminal device, and the any information is not limited.

With reference to a plurality of embodiments, the following describes an example of a method for determining a corresponding PO by the terminal device based on the first information.

### Embodiment 1

The first information may include the type of the PO in the first cycle and/or the type of the terminal device. POs in the first cycle may include at least two types of POs. The at least two types of POs may be respectively used to send at least two types of paging messages or perform paging actions on at least two types of terminal devices. That is, time-frequency resources (POs) used by the network side to send paging messages may be divided into at least two groups.

In some embodiments, the at least two types of POs may include a legacy PO, may include a PO supporting NES configuration, and may further include a PO related to other energy-saving configuration, which is not limited herein.

In some embodiments, the at least two types of POs may be respectively corresponding to at least two types of terminal devices, or may be respectively corresponding to at least two types of application scenarios. The terminal device may perform paging detection on a PO of a corresponding type based on the type and an application scenario of the terminal device. For brevity, the following uses an example in which POs in the first cycle include two types of POs.

In an example, POs in the first cycle can include a first type of PO and a second type of PO. The first type of PO corresponds to a first type of terminal device without the NES function, and the second type of PO corresponds to a second type of terminal device with the NES function. For example, the first type of PO is used to send a paging message to a legacy terminal device, and the second type of PO is used to send a paging message to a NES terminal device. That is, when the terminal device is a legacy terminal device, one or more POs corresponding to the terminal device are POs of the first type of PO; or when the terminal device has the NES function, one or more POs corresponding to the terminal device are POs of the second type of PO.

In an example, the first type of PO is a legacy PO, and the second type of PO is a NES PO. When the terminal device is a legacy terminal device, paging detection may be performed on a legacy PO. When the terminal device is a NES terminal device, paging detection may be performed on a NES PO.

In some embodiments, positions of the first type of PO and the second type of PO in the first cycle may be determined separately. For example, the position of the first type of PO may be determined based on a related calculation formula; the position of the second type of PO is specified by a system through a network device or a higher layer.

In an example, the system may identify a specific system frame number (system frame number, SFN) for a specific type of terminal device. For example, the system may identify a specific SFN for the NES terminal device and consecutively allocate a plurality of PFs for the NES terminal device or consecutively allocate these PFs at some regular intervals.

In an example, the system may consider separately configuring/indicating a start offset of each second type of PO for each PF. For example, the system may indicate a start offset of each NES PO for each PF.

In some embodiments, the position of the second type of PO in the first cycle may be determined based on the position of the first type of PO. In this scenario, paging behaviors of different types of terminal devices do not affect each other. For example, when the first type of PO is a legacy PO and the second type of PO is a NES PO, the NES PO may be allocated based on a time/frequency offset of the legacy PO.

In an example, any PO of the second type of PO may be determined based on a position of any PO of the first type of PO.

In an example, any PO of the second type of PO may be determined based on a position of one or more POs of the first type of PO adjacent to the any PO of the second type of PO.

In an example, in a DRX cycle, a total quantity of POs provided by the system for the NES terminal device may be the same as a total quantity of POs for the legacy terminal device, so as to ensure that paging delay levels of the legacy terminal device and the NES terminal device are the same.

In an example, in a DRX cycle, a total quantity of POs provided by the system for the NES terminal device may be different from a total quantity of POs for the legacy terminal device, so as to meet paging requirements of different types of terminal devices.

In an example, a NES PO may exist in each PF. For example, the NES PO may use a same paging frame as a legacy PO, and an index position of a NES PO in each PF may be set according to a same rule.

In an example, the position of the second type of PO in the first cycle is determined based on the position of the first type of PO and a first offset value. Optionally, the first offset value may be configured by a network device or a higher layer.

In an implementation, the first offset value may be provided through a SIB or DCI.

In an example, manners of determining IDs of the first type of terminal device and the second type of terminal device are the same, so that the first type of PO and the second type of PO may be allocated based on an offset value. The following uses an example in which the first type of PO is a legacy PO and the second type of PO is a NES PO to separately describe manners of determining positions of the first type of PO and the second type of PO.

A position *iₛ* of the first type of PO in any PF in the first cycle is: *iₛ* = *floor*(*UE_{ID}*/*N*) mod *Nₛ*; and
a position *i_{s,NES}* of the second type of PO in any PF in the first cycle is: ${i}_{s , NES} = {PO}_{offset} + floor \left({UE}_{ID}/N\right) mod {N}_{s} ,$
where *PO_{offset}* represents the first offset value, *UE_{ID}* represents an ID of the terminal device, *N* represents a quantity of PFs in one cycle, and *Nₛ* represents a quantity of POs in one PF. The first offset value is a PO offset for receiving paging by the NES terminal device in comparison with the legacy terminal device.

Optionally, *UE_{ID}* may be determined based on an international mobile subscriber identity (international mobile subscriber identity, IMSI), or may be determined based on a 5G S-temporary mobile subscription identity (5G S-temporary mobile subscription identifier, 5G-S-TMSI).

In an example, *UE_{ID}* may be IMSI mod 1024.

In an example, if the terminal device is in an eDRX cycle, *UE_{ID}* may be 5G-S-TMSI mod 4096; otherwise, *UE_{ID}* may be 5G-S-TMSI mod 1024.

Optionally, an SFN corresponding to any PF in the first cycle needs to meet a formula: (SFN + *PF_{offset}*) mod T = (T div *N*) × (*UE_{ID}* mod *N*), where T represents a paging cycle, and *PF*_{*o*ffset} is a frame offset of the PF.

In an example, after calculating a PF in which a PO is located, the terminal device calculates a position *i_{s,NES}* of the NES PO in the PF. The terminal device may perform paging detection based on the calculated position, and so on until DCI corresponding to the terminal device is detected in the paging cycle. Accurate positions of PFs/POs corresponding to the legacy terminal device and a terminal device supporting a NES cell may be separately determined by using the foregoing formula, to avoid that any terminal device may detect a plurality of unnecessary PFs/POs.

For ease of understanding, with reference to FIG. 3, a paging manner for the legacy PO and the NES PO that coexist is described as an example. FIG. 3 shows two DRX cycles. In two DRX cycles, the paging frame (PF) appears periodically. There are two legacy POs and one NES PO in each PF. As shown in FIG. 3, in each PF, after a legacy PO is determined, a NES PO may be determined based on a position of a PO adjacent to the NES PO and a corresponding offset value, or may be determined based on a position of a start PO in the PF and a corresponding offset value.

In some embodiments, the first type of PO and the second type of PO may be respectively located in different PFs in the first cycle. That is, the system may indicate different PFs for different scenarios or different terminal devices, to determine corresponding POs. For example, the first type of PO is located in a first PF, and the second type of PO is located in a second PF.

In an example, the first PF and the second PF each may be one or more PFs respectively.

In an example, the first PF is a legacy PF, and the second PF is a NES PF. A PO located in the first PF may be used for the legacy terminal device, and a PO located in the second PF may be used for the NES terminal device. Legacy PFs are evenly distributed over DRX cycles, and NES PFs may be different from legacy PFs. In a NES cell, both the legacy terminal device and the NES terminal device may be supported. Because the NES terminal device may support different SSB cycles and on-demand SIBs, a separate PF and a corresponding PO may be configured for the NES terminal device.

In an example, the system may set a NES-specific PF, or a specific PF number is used for NES.

In an example, the system may configure one or more NES PFs in a paging cycle through *N_{NES}*. For example, because a plurality of PFs are evenly distributed over paging cycles, a simplest method is to configure only one PF in a paging cycle, that is, *N_{NES}*=1 is used. This may require a change to an RRC configuration to allow more values to be configured for nAndPagingFrameOffset, that is, to allow more dense paging cycles.

In an implementation, *N_{NES}* may be extended from T/16 to T/32, T/64, T/128, or T/256. For a paging cycle T = 1280 ms, if *N_{NES}* = T/128, there is only one NES PF in this cycle. Therefore, to adapt to an increase in a quantity of terminal devices that need to be paged in one PF, a quantity of subframes used for the PO further needs to be increased, and a value range of Ns also needs to be increased.

In an example, the system may specify an odd-numbered PF as a PF (first PF) of the legacy terminal device, and an even-numbered PF as a PF (second PF) of the NES terminal device. Each PF has its respective PO. In other words, any PO in a PF corresponding to the legacy terminal device belongs to the PO of the legacy terminal device, and any PO in a PF corresponding to the NES terminal device belongs to the PO of the NES terminal device.

In an example, DCI may be configured separately for each NES PF and indicates a start offset of a PO.

In an implementation, the first PF includes a first type of PO located at a first position, and the second PF includes a second type of PO located at a second position; and a position of the first position in the first PF is the same as a position of the second position in the second PF, to facilitate indication by the system.

In an implementation, the first PF includes a first type of PO located at a first position, and the second PF includes a second type of PO located at a second position; and a position of the first position in the first PF is different from a position of the second position in the second PF, to distinguish between different PFs.

In an example, the second PF may be determined based on the first PF and a second offset value. For example, the system may allocate a NES PF based on a time/frequency offset of a legacy PF. Legacy PFs are evenly distributed in DRX cycles, and therefore NES PFs are evenly distributed in the DRX cycles. In this case, a paging behavior for the legacy terminal device is not affected.

In an example, the first PF and the second PF may coexist in a same cycle, or may not be in a same cycle.

In an example, the first cycle includes the first PF and the second PF. The second PF may be one or more PFs other than the first PF in the first cycle. For example, a legacy PF and a NES PF may coexist in a DRX cycle.

In an example, the second PF may be a PF in any cycle in the first cycle set. The first cycle set may be a set of a plurality of cycles including second PFs. The first information may be used to indicate whether the first cycle set includes the first cycle. That is, when terminal devices of different types respectively correspond to different PFs, the terminal device may determine, based on the first information, whether the first cycle includes the second PF. For example, for the NES terminal device, when the first information indicates that the first cycle includes the NES PF, the terminal device performs detection in the first cycle. When the first information indicates that the first cycle does not include the NES PF, the terminal device does not perform detection in the first cycle.

In an implementation, when the first cycle is a DRX cycle, the system may specify information about a NES PF in each DRX cycle, and notify the terminal device by using the first information. For example, the system may determine, based on a current cell load status and/or a quantity of NES terminal devices requesting access, whether the first cycle includes the NES PF.

In an implementation, when the first cycle is a DRX cycle, the system may configure a NES PF only in a specified DRX cycle. That is, there are no NES PFs in some DRX cycles, and there are NES PFs in some DRX cycles.

For ease of understanding, with reference to FIG. 4, another paging manner for the legacy PO and the NES PO that coexist is described as an example. FIG. 4 also shows two DRX cycles. In the 1st DRX cycle, a legacy PF and a NES PF are included. In the 2nd DRX cycle, only a legacy PF is included. A PO in the legacy PF is a legacy PO, and a PO in the NES PF is a NES PO. As shown in FIG. 4, a position of the NES PO in the NES PF is the same as a position of the legacy PO in the legacy PF.

### Embodiment 2

The first information may include the type of the terminal device. It may be learned from the foregoing description that the type of the terminal device is one of at least two terminal device types. For brevity, two types of terminal devices are used as an example for description. Terminal devices that receive paging in the first cycle may be grouped based on different types. In other words, the type of the terminal device may be used to determine a first type of terminal device and a second type of terminal device.

In some embodiments, because the PO corresponding to the terminal device is determined based on the ID of the terminal device, terminal devices of different types may be grouped by ID. In other words, differentiated processing is performed for manners of determining IDs of terminal devices of different types, so as to determine one or more POs corresponding to terminal devices of different types.

In an example, IDs of the first type of terminal device and the second type of terminal device may be determined in different manners. For example, when the first type of terminal device is a legacy terminal device and the second type of terminal device is a NES terminal device, to support both the legacy terminal device and the terminal device supporting a NES cell, the network may differentiate values of IDs of the legacy terminal device and the NES terminal device. For example, a value range of an ID of the legacy terminal device is different from a value range of an ID of the NES terminal device.

In an example, an index or a number of a terminal device in a plurality of terminal devices is used to determine a PF in which one or more POs are located. Because IDs of terminal devices of different types are determined in different manners, after terminal devices of a plurality of types that receive paging are uniformly numbered, terminal devices of different types may be distinguished by number values of the terminal devices, and PFs corresponding to the terminal devices may be determined.

In an example, all POs in the first cycle are used to send paging messages to the first type of terminal device and the second type of terminal device. A PF in which one or more POs corresponding to the terminal device are located is determined based on paging density in the first cycle and the ID of the terminal device.

In an implementation, the paging density may be determined based on a quantity of the first type of terminal devices and the second type of terminal devices that receive paging in the first cycle.

In an implementation, the paging density may be determined based on a quantity of the first type of terminal devices and a quantity of the second type terminal devices in the first cycle.

In an example, a PF in which one or more POs corresponding to the terminal device are located may be determined based on a number or an index of the terminal device in all terminal devices that receive paging in the first cycle.

In an example, a PF in which one or more POs corresponding to the terminal device are located may be determined based on paging density and a number or an index of the terminal device in all terminal devices that receive paging in the first cycle.

In an example, it is assumed that a group of terminal devices that receive paging in a first cell includes a legacy terminal device and a NES terminal device. *UE_{id}* is an ID of the legacy terminal device, and *UE_{NES_id}* is an ID of a terminal device supporting a NES cell. It is assumed that there are M₁ legacy terminal devices that receive paging and there are M₂ NES terminal devices. M₁ *UE_{id}* and M₂ *UE_{NES_id}* are uniformly numbered, and the index *index'* may be expressed as: $index ′ = 0 , 1 , 2 , … {M}_{1} + {M}_{2} - 1 .$

M₁ + M₂ terminal devices that receive paging may be numbered in sequence. After uniform numbering, a number of each terminal device may be determined based on a value relationship of M₁ and M₂ . A number ${UE}_{index}^{i}$, of terminal device i (i∈ *index'*) may be determined based on an ID of terminal device i.

If M₁ > M₂, for an index range of *index'* ≤ 2M₂ - 1, the number ${UE}_{index ′}^{i}$ of terminal device i may be: ${UE}_{index ′}^{i} = {UE}_{id} mod \left({M}_{1}\right) \times 2 ;$ ${UE}_{index ′}^{i} = {UE}_{NES _ id} mod \left({M}_{2}\right) \times 2 + 1 ;$ and
for an index range of *index'* ≥ 2M₂, the number ${UE}_{index ′}^{i}$ of terminal device i may be: ${UE}_{index ′}^{id} = {UE}_{id} mod \left({M}_{1}\right) + {M}_{2}$*.*

If M₁ < M₂, for an index range of *index'* ≤ 2M₁ - 1, the number ${UE}_{index ′}^{i}$ of the terminal device i may be: ${UE}_{index ′}^{i} = {UE}_{id} mod \left({M}_{1}\right) \times 2 ;$ ${UE}_{index ′}^{i} = {UE}_{NES _ id} mod \left({M}_{2}\right) \times 2 + 1 ;$ and for an index range of *index'* ≥ 2M₁, the number ${UE}_{index ′}^{i}$ of terminal device i may be: ${UE}_{index ′}^{i} = {UE}_{NES _ id} mod \left({M}_{2}\right) ∗ 2 + {M}_{1} .$

Let *PFᵢ* correspond to a PF number of terminal device i in M₁ + M₂ terminal devices, and let *D_{f}* represent paging density on the PF, that is, a quantity of terminal devices allocated on each PF. *Dₒ* may represent the quantity of terminal devices allocated on each PO. ${PF}_{i} = i / {D}_{f} , where {D}_{f} = \left⌈\left({M}_{1}+{M}_{2}\right)/N\right⌉ .$

If ${UE}_{index ′}^{i} < {D}_{f}$*,* paging of terminal device i is in a 0th paging frame; if ${D}_{f} \leq {UE}_{index ′}^{i} < 2 {D}_{f}$ *,* paging of terminal device i is in a 1st paging frame; if $2 {D}_{f} \leq {UE}_{index ′}^{i} < 3 {D}_{f}$*,* paging of terminal device i is in a 2nd paging frame; and so on, until DCI of terminal device i is detected in a paging cycle. In the method described above, accurate positions of PFs corresponding to the legacy terminal device and the terminal device supporting a NES cell may be obtained separately, thereby avoiding detection of a plurality of unnecessary PFs.

### Embodiment 3

The first information may include the type of the PEI received by the terminal device and/or the type of the terminal device. For the network device, the first information on which the network device bases its operations may include the type of the PEI sent to the terminal device and/or the type of the terminal device.

It should be understood that the PEI in this embodiment of the present application may be replaced with an early paging indication (early paging indication, EPI).

In some embodiments, the PEI received by the terminal device may include at least two types of PEIs. The at least two types of PEIs may be respectively used to instruct at least two types of terminal devices to receive paging messages. That is, PEIs sent by the network side may be divided into at least two groups.

In an example, the at least two types of PEIs may include a legacy PEI for a legacy terminal device and a NES PEI for a NES terminal device. For example, the PEI received by the terminal device may be a legacy PEI or a NES PEI.

In an example, when PEIs are set on the network side, PEIs of different types may be different to help the terminal device distinguish them. For example, settings of a NES PEI and a PEI of a legacy terminal device may be different.

In an example, the network device may indicate different types of PEIs through DCI or a PEI occasion (PEI occasion, PEI-O).

In an example, PEIs of different types may have different identifiers, so that a type of a PEI is determined based on an identifier. The terminal device may determine a type of a PEI based on an identifier of the received PEI. The identifier of the PEI may be carried in the PEI or may be sent before the PEI.

In an example, the type of PEI may be used by the terminal device to determine whether the terminal device needs to be woken up for paging detection.

In some embodiments, because the identifier of the PEI may correspond to different types of terminal devices, POs corresponding to different types of terminal devices may overlap, thereby saving resources. On an overlapping PO, different types of terminal devices may determine, based on a type of a received PEI, whether to be woken up. For example, when the PEI is a NES PEI, if the terminal device is a legacy terminal device, the terminal device does not perform detection on a PO/PF indicated by the PEI, and therefore does not need to be woken up; or if the terminal device is a NES terminal device, the terminal device needs to be woken up to detect whether there is a paging message for the terminal device.

In an example, when the first type of terminal device corresponds to a first type of PO, and the second type of terminal device corresponds to a second type of PO, the first type of PO and the second type of PO completely overlap or partially overlap.

In an example, if a legacy PO and a NES PO completely overlap, manners of determining IDs of terminal devices of different types need to be defined to be the same. That is, a terminal device ID allocated to the NES PO is the same as a terminal device ID allocated to the legacy PO.

In an example, when the first type of terminal device corresponds to a first PF, and the second type of terminal device corresponds to a second PF, the first PF and the second PF completely overlap or partially overlap.

In an example, the NES PF/PO and the legacy PF/PO should overlap as much as possible. When the network device (for example, a gNB) provides a paging message to a specific terminal device, the paging message may be sent through an overlapping PO of the legacy terminal device and the NES terminal device. Further, when the network device attempts to wake up the NES terminal device, the identifier of the PEI can prevent the legacy terminal device from being woken up unnecessarily.

In some embodiments, a type of a PEI sent by the network device to the terminal device may be determined based on a setting of the PEI. A NES PEI sent by the network device is different from a legacy PEI, so that the legacy terminal device is not woken up when the NES terminal device needs to be woken up.

### Embodiment 4

The first information may include whether PFs in the first cycle are consecutive. If the PFs in the first cycle are consecutive, the network device and the terminal device perform paging behavior during a time period with consecutive PFs. If the PFs in the first cycle are evenly distributed, a communication device performs a paging mechanism in a related manner.

In some embodiments, whether the PFs in the first cycle are consecutive refers to whether the PFs in the first cycle are consecutive in terms of time resources.

In order to save energy on the network side, a plurality of PFs evenly distributed in a paging cycle may be configured as consecutive or partially consecutive PFs. In this scenario, the terminal device only needs to perform paging detection within consecutive PFs, and therefore sleep time of the terminal device may also be increased.

In some embodiments, some or all of the PFs in the first cycle are consecutive in terms of time resources. One or more POs corresponding to the terminal device may be determined based on time domain positions of the some or entire consecutive PFs in the first cycle.

A default paging cycle of T=128 radio frames (radio frame) is used as an example. When N = T/16, there are only 8 paging frames every 1280 ms. If a formula for calculating the paging frame is (SFN + *PF_{offset}*) mod T = (T div *N*) × (*UE_{ID}* mod *N*), the 8 paging frames are evenly distributed in the paging cycle. In this formula, due to the operation of (*UE_{ID}* mod *N*), a plurality of terminal devices may be sequentially allocated to 8 PFs according to *UE_{ID}*. In order to concentrate the PFs in a continuous time period, the formula for calculating the PFs needs to be adjusted, and a formula for calculating the PO may remain unchanged.

In an example, when all PFs in the first cycle are consecutive in terms of time resources, all the PFs satisfy the following condition: $\left(SFN+{PF}_{offset}\right) mod T = {UE}_{ID} mod N ,$
where *SFN* is a system frame number, *PF_{offset}* represents an offset value of all the PFs in the first cycle, and T represents a paging cycle.

If *PF_{offset}* = 0, a plurality of consecutive PFs are located at a start position of the first cycle. FIG. 5 is a schematic diagram when *PF_{offset}* = 0. T = 128 radio frames, and N = T/16. As shown in FIG. 5, PFs are concentrated in the first 8 radio frames of the cycle T, and subsequent frames do not require paging.

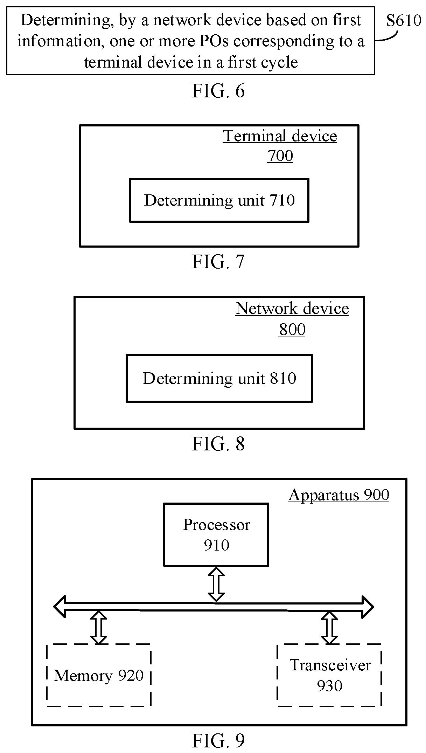

The foregoing describes, with reference to FIG. 2 to FIG. 5, the method for determining one or more corresponding POs on the terminal device. The one or more POs are used by a network device to send a paging message to the terminal device. Therefore, the network device also needs to determine the one or more POs. The following describes, with reference to FIG. 6, a method for determining the one or more POs by the network device. For brevity, nouns already explained in FIG. 2 are no longer described in detail.

Refer to FIG. 6. Step S610: Determining, by the network device based on first information, one or more POs corresponding to the terminal device in a first cycle. The network device is any network device or core network device corresponding to a first cell in which the terminal device is located. Details are not described herein again.

The first information may include one or more of following information: a type of a PO in the first cycle; a type of the terminal device; a type of a PEI sent by the network device to the terminal device; and whether PFs in the first cycle are consecutive. For the first information, refer to the foregoing embodiments. Details are not described herein again.

In some embodiments, the network device first determines an identifier of a PEI to be sent to the terminal device, and then sends the PEI to the terminal device. The identifier of the PEI may be used by the terminal device to determine the type of the PEI, and the type of the PEI may be used to determine whether the terminal device is to be woken up.

The foregoing describes the method embodiments of the present application in detail with reference to FIG. 1 to FIG. 6. The following describes in detail the apparatus embodiments of the present application with reference to FIG. 7 to FIG. 9. It should be understood that the description of the apparatus embodiments corresponds to the description of the method embodiments. Therefore, for parts that are not described in detail, refer to the foregoing method embodiments.

FIG. 7 is a schematic block diagram of a terminal device according to an embodiment of the present application. The terminal device 700 may be any one of the terminal devices described above. The terminal device 700 shown in FIG. 7 includes a determining unit 710.

The determining unit 710 may be configured to determine, based on first information, one or more POs corresponding to a terminal device in a first cycle, where the first information includes one or more of following information: a type of a PO in the first cycle; a type of the terminal device; a type of a PEI received by the terminal device; and whether PFs in the first cycle are consecutive.

Optionally, POs in the first cycle includes a first type of PO and a second type of PO, and a position of the second type of PO in the first cycle is determined based on a position of the first type of PO.

Optionally, the position of the second type of PO in the first cycle is determined based on the position of the first type of PO and a first offset value.

Optionally, the second type of PO corresponds to a second type of terminal device having a network energy saving NES function, and the first type of PO corresponds to a first type of terminal device having no NES function; and manners of determining identities IDs of the first type of terminal device and the second type of terminal device are the same.

Optionally, a position *i_{s,NES}* of the second type of PO in any PF in the first cycle is: ${i}_{s , NES} = {PO}_{offset} + floor \left({UE}_{ID}/N\right) mod {N}_{s} ,$
where *PO_{offset}* represents the first offset value, *UE_{ID}* represents an ID of the terminal device, *N* represents a quantity of PFs in one cycle, and *Nₛ* represents a quantity of POs in one PF.

Optionally, the first type of PO and the second type of PO are respectively located in different PFs, the first type of PO is located in a first PF, the second type of PO is located in a second PF, and the second PF is one of the following: one or more PFs other than the first PF in the first cycle; or a PF in any cycle in a first cycle set, where the first information is further used to indicate whether the first cycle set includes the first cycle.

Optionally, the first PF comprises a first type of PO located at a first position, and the second PF comprises a second type of PO located at a second position; and a position of the first position in the first PF is the same as a position of the second position in the second PF.

Optionally, the terminal device has an NES function, and the one or more POs are POs belonging to the second type of PO.

Optionally, the type of the terminal device is used to determine a first type of terminal device and a second type of terminal device, and manners of determining IDs of the first type of terminal device and the second type of terminal device are different.

Optionally, all POs in the first cycle are used to send paging messages to the first type of terminal device and the second type of terminal device, and a PF in which the one or more POs are located is determined based on paging density in the first cycle and the ID of the terminal device.

Optionally, the determining unit 710 is further configured to determine the type of the PEI based on an identifier of the received PEI, where the type of the PEI is used to determine whether the terminal device is to be woken up.

Optionally, the type of the terminal device is used to determine a first type of terminal device and a second type of terminal device, the first type of terminal device corresponds to a first type of PO, the second type of terminal device corresponds to a second type of PO, and the first type of PO and the second type of PO completely overlap or partially overlap.

Optionally, some or all PFs in the first cycle are consecutive in terms of time resources, and the one or more POs are determined based on time domain positions of the some or all PFs in the first cycle.

Optionally, all PFs in the first cycle are consecutive in terms of time resources, and all the PFs satisfy the following condition: $\left(SFN+{PF}_{offset}\right) mod T = {UE}_{ID} mod N ,$
where SFN is a system frame number, *PF_{offset}* represents an offset value of all the PFs in the first cycle, and T represents a paging cycle.

FIG. 8 is a schematic block diagram of a network device according to an embodiment of the present application. The network device 800 may be any one of the foregoing network devices. The network device 800 shown in FIG. 8 includes a determining unit 810.

The determining unit 810 may be configured to determine, based on first information, one or more POs corresponding to a terminal device in a first cycle, where the first information includes one or more of following information: a type of a PO in the first cycle; a type of the terminal device; a type of a PEI sent by the network device to the terminal device; and whether PFs in the first cycle are consecutive.

Optionally, POs in the first cycle comprises a first type of PO and a second type of PO, and a position of the second type of PO in the first cycle is determined based on a position of the first type of PO.

Optionally, the position of the second type of PO in the first cycle is determined based on the position of the first type of PO and a first offset value.

Optionally, the second type of PO corresponds to a second type of terminal device having a network energy saving NES function, and the first type of PO corresponds to a first type of terminal device having no NES function; and manners of determining identities IDs of the first type of terminal device and the second type of terminal device are the same.

Optionally, a position *i_{s,NES}* of the second type of PO in any PF in the first cycle is: ${i}_{s , NES} = {PO}_{offset} + floor \left({UE}_{ID}/N\right) mod {N}_{s} ,$
where *PO_{offset}* represents the first offset value, *UE_{ID}* represents an ID of the terminal device, *N* represents a quantity of PFs in one cycle, and *Nₛ* represents a quantity of POs in one PF.

Optionally, the first type of PO and the second type of PO are respectively located in different PFs, the first type of PO is located in a first PF, the second type of PO is located in a second PF, and the second PF is one of the following: one or more PFs other than the first PF in the first cycle; or a PF in any cycle in a first cycle set, where the first information is further used to indicate whether the first cycle set includes the first cycle.

Optionally, the first PF comprises a first type of PO located at a first position, and the second PF comprises a second type of PO located at a second position; and a position of the first position in the first PF is the same as a position of the second position in the second PF.

Optionally, the terminal device has an NES function, and the one or more POs are POs belonging to the second type of PO.

Optionally, the type of the terminal device is used to determine a first type of terminal device and a second type of terminal device, and manners of determining IDs of the first type of terminal device and the second type of terminal device are different.

Optionally, all POs in the first cycle are used to send paging messages to the first type of terminal device and the second type of terminal device, and a PF in which the one or more POs are located is determined based on paging density in the first cycle and the ID of the terminal device.

Optionally, the determining unit 810 is further configured to determine an identifier of the PEI sent to the terminal device, where the identifier of the PEI is used by the terminal device to determine the type of the PEI, and the type of the PEI is used to determine whether the terminal device is to be woken up.

Optionally, the type of the terminal device is used to determine a first type of terminal device and a second type of terminal device, the first type of terminal device corresponds to a first type of PO, the second type of terminal device corresponds to a second type of PO, and the first type of PO and the second type of PO completely overlap or partially overlap.

Optionally, some or all PFs in the first cycle are consecutive in terms of time resources, and the one or more POs are determined based on time domain positions of the some or all PFs in the first cycle.

Optionally, all PFs in the first cycle are consecutive in terms of time resources, and all the PFs satisfy the following condition: $\left(SFN+{PF}_{offset}\right) mod T = {UE}_{ID} mod N ,$
where SFN is a system frame number, *PF_{offset}* represents an offset value of all the PFs in the first cycle, and T represents a paging cycle.

FIG. 9 is a schematic diagram of a structure of a communication apparatus according to an embodiment of the present application. Dashed lines in FIG. 9 indicate that a unit or module is optional. The apparatus 900 may be configured to implement the method described in the foregoing method embodiment. The apparatus 900 may be a chip, a terminal device, or a network device.

The apparatus 900 may include one or more processors 910. The processor 910 may support the apparatus 900 in implementing the method described in the foregoing method embodiment. The processor 910 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 900 may further include one or more memories 920. The memory 920 stores a program, and the program may be executed by the processor 910, to cause the processor 910 to execute the method described in the foregoing method embodiment. The memory 920 may be independent of or integrated into the processor 910.

The apparatus 900 may further include a transceiver 930. The processor 910 may communicate with another device or chip through the transceiver 930. For example, the processor 910 may transmit data to and receive data from another device or chip through the transceiver 930.

An embodiment of the present application further provides a computer-readable storage medium for storing a program. The computer-readable storage medium may be applied to the terminal device or the network device provided in embodiments of the present application, and the program causes a computer to execute the method executed by the terminal device or the network device in various embodiments of the present application.

The computer-readable storage medium may be any available medium accessible by a computer or a data storage device such as a server or a data center that integrates one or more available media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

An embodiment of the present application further provides a computer program product. The computer program product includes a program. The computer program product may be applied to the terminal device or the network device provided in embodiments of the present application, and the program causes a computer to execute the methods executed by the terminal device or the network device in various embodiments of the present application.

All or some of the foregoing embodiments may be implemented by using software, hardware, firmware, or any combination thereof. When the software is used for implementation, all or some of embodiments may be implemented in a form of a computer program product. The computer program product includes one or more computer instructions. When the computer program instructions are loaded and executed on a computer, the procedures or functions according to embodiments of the present application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired (for example, through a coaxial cable, an optical fiber, or a digital subscriber line (digital subscriber line, DSL)) manner or a wireless (such as infrared, wireless, and microwave) manner.

An embodiment of the present application further provides a computer program. The computer program may be applied to the terminal device or the network device provided in embodiments of the present application, and the computer program causes a computer to execute the methods executed by the terminal device or the network device in various embodiments of the present application.

The terms "system" and "network" in the present application may be used interchangeably. In addition, the terms used in the present application are merely used to explain the specific embodiments of the present application, and are not intended to limit the present application. In the specification, claims, and accompanying drawings of the present application, the terms "first", "second", "third", "fourth", and so on are intended to distinguish between different objects but do not describe a particular order. In addition, the terms "include" and "have" and any variations thereof are intended to cover a non-exclusive inclusion.

In embodiments of the present application, "indicate" mentioned herein may be a direct indication, or may be an indirect indication, or may mean that there is an association relationship. For example, A indicates B, which may mean that A directly indicates B, for example, B may be obtained by using A; or may mean that A indirectly indicates B, for example, A indicates C, and B may be obtained by using C; or may mean that there is an association relationship between A and B.

In embodiments of the present application, the term "corresponding" may mean that there is a direct or indirect correspondence between two elements, or that there is an association between two elements, or that there is a relationship of "indicating" and "being indicated", "configuring" and "being configured", or the like.

In embodiments of the present application, "pre-defining" or "pre-configuring" can be implemented by pre-storing corresponding codes, tables, or other forms that may be used to indicate related information in devices (for example, including a terminal device and a network device). A specific implementation thereof is not limited in the present application. For example, being pre-defined may refer to being defined in a protocol.

In embodiments of the present application, the "protocol" may indicate a standard protocol in the communication field, which may include, for example, an LTE protocol, an NR protocol, and a related protocol applied to a future communication system. This is not limited in the present application.

In embodiments of the present application, determining B based on A does not mean determining B based on only A, but instead B may be determined based on A and/or other information.

In embodiments of the present application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of the present application, sequence numbers of the foregoing processes do not mean execution orders. The execution orders of the processes should be determined based on functions and internal logic of the processes, and should not be construed as any limitation on the implementation processes of embodiments of the present application.

In several embodiments provided in the present application, it should be understood that, the disclosed system, apparatus, and method may be implemented in other manners. For example, the foregoing described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. Indirect couplings or communication connections between apparatuses or units may be implemented in electrical, mechanical, or other forms.

The units described as separate parts may be or may not be physically separate, and parts displayed as units may be or may not be physical units, and may be at one location, or may be distributed on a plurality of network elements. Some or all of the units may be selected according to actual requirements to achieve the objectives of the solutions of embodiments.

In addition, functional units in embodiments of the present application may be integrated into one processing unit, or each of the units may exist alone physically, or two or more units may be integrated into one unit.

The foregoing descriptions are merely specific implementations of the present application, but the protection scope of the present application is not limited thereto. Any variation or replacement readily figured out by a person skilled in the art within the technical scope disclosed in the present application shall fall within the protection scope of the present application. Therefore, the protection scope of the present application shall be subject to the protection scope of the claims.

## Claims

1. A method for wireless communication, comprising:
determining, by a terminal device based on first information, one or more paging occasions POs corresponding to the terminal device in a first cycle,
wherein the first information comprises one or more of following information:
a type of a PO in the first cycle;
a type of the terminal device;
a type of a paging early indication PEI received by the terminal device; and
whether paging frames PFs in the first cycle are consecutive.

2. The method according to claim 1, wherein POs in the first cycle comprises a first type of PO and a second type of PO, and a position of the second type of PO in the first cycle is determined based on a position of the first type of PO.

3. The method according to claim 2, wherein the position of the second type of PO in the first cycle is determined based on the position of the first type of PO and a first offset value.

4. The method according to claim 3, wherein the second type of PO corresponds to a second type of terminal device having a network energy saving NES function, and the first type of PO corresponds to a first type of terminal device having no NES function; and manners of determining identities IDs of the first type of terminal device and the second type of terminal device are the same.

5. The method according to claim 3 or 4, wherein a position *i_{s,NES}* of the second type of PO in any PF in the first cycle is: ${i}_{s , NES} = {PO}_{offset} + floor \left({UE}_{ID}/N\right) mod {N}_{s} ,$ wherein *PO_{offset}* represents the first offset value, *UE_{ID}*represents an ID of the terminal device, *N* represents a quantity of PFs in one cycle, and *Nₛ* represents a quantity of POs in one PF.

6. The method according to claim 2, wherein the first type of PO and the second type of PO are respectively located in different PFs, the first type of PO is located in a first PF, the second type of PO is located in a second PF, and the second PF is one of the following:
one or more PFs other than the first PF in the first cycle; or
a PF in any cycle in a first cycle set,
wherein the first information is further used to indicate whether the first cycle set comprises the first cycle.

7. The method according to claim 6, wherein the first PF comprises a first type of PO located at a first position, and the second PF comprises a second type of PO located at a second position; and a position of the first position in the first PF is the same as a position of the second position in the second PF.

8. The method according to any one of claims 2 to 7, wherein the terminal device has an NES function, and the one or more POs are POs belonging to the second type of PO.

9. The method according to claim 1, wherein the type of the terminal device is used to determine a first type of terminal device and a second type of terminal device, and manners of determining IDs of the first type of terminal device and the second type of terminal device are different.

10. The method according to claim 9, wherein all POs in the first cycle are used to send paging messages to the first type of terminal device and the second type of terminal device, and a PF in which the one or more POs are located is determined based on paging density in the first cycle and the ID of the terminal device.

11. The method according to claim 1, wherein the method further comprises:
determining, by the terminal device, the type of the PEI based on an identifier of the received PEI, wherein the type of the PEI is used to determine whether the terminal device is to be woken up.

12. The method according to claim 11, wherein the type of the terminal device is used to determine a first type of terminal device and a second type of terminal device, the first type of terminal device corresponds to a first type of PO, the second type of terminal device corresponds to a second type of PO, and the first type of PO and the second type of PO completely overlap or partially overlap.

13. The method according to any one of claims 1 to 11, wherein some or all PFs in the first cycle are consecutive in terms of time resources, and the one or more POs are determined based on time domain positions of the some or all PFs in the first cycle.

14. The method according to claim 13, wherein all PFs in the first cycle are consecutive in terms of time resources, and all the PFs satisfy the following condition: $\left(SFN+{PF}_{offset}\right) mod T = {UE}_{ID} mod N ,$ wherein SFN is a system frame number, *PF_{offset}* represents an offset value of all the PFs in the first cycle, and T represents a paging cycle.

15. A method for wireless communication, comprising:
determining, by a network device based on first information, one or more paging occasions POs corresponding to a terminal device in a first cycle,
wherein the first information comprises one or more of following information:
a type of a PO in the first cycle;
a type of the terminal device;
a type of a paging early indication PEI sent by the network device to the terminal device; and
whether paging frames PFs in the first cycle are consecutive.

16. The method according to claim 15, wherein POs in the first cycle comprises a first type of PO and a second type of PO, and a position of the second type of PO in the first cycle is determined based on a position of the first type of PO.

17. The method according to claim 16, wherein the position of the second type of PO in the first cycle is determined based on the position of the first type of PO and a first offset value.

18. The method according to claim 17, wherein the second type of PO corresponds to a second type of terminal device having a network energy saving NES function, and the first type of PO corresponds to a first type of terminal device having no NES function; and manners of determining identities IDs of the first type of terminal device and the second type of terminal device are the same.

19. The method according to claim 17 or 18, wherein a position *i_{s,NES}* of the second type of PO in any PF in the first cycle is: ${i}_{s , NES} = {PO}_{offset} + floor \left({UE}_{ID}/N\right) mod {N}_{s} ,$ wherein *PO_{offset}* represents the first offset value, *UE_{ID}*represents an ID of the terminal device, *N* represents a quantity of PFs in one cycle, and *Nₛ* represents a quantity of POs in one PF.

20. The method according to claim 16, wherein the first type of PO and the second type of PO are respectively located in different PFs, the first type of PO is located in a first PF, the second type of PO is located in a second PF, and the second PF is one of the following:
one or more PFs other than the first PF in the first cycle; or
a PF in any cycle in a first cycle set,
wherein the first information is further used to indicate whether the first cycle set comprises the first cycle.

21. The method according to claim 20, wherein the first PF comprises a first type of PO located at a first position, and the second PF comprises a second type of PO located at a second position; and a position of the first position in the first PF is the same as a position of the second position in the second PF.

22. The method according to any one of claims 16 to 21, wherein the terminal device has an NES function, and the one or more POs are POs belonging to the second type of PO.

23. The method according to claim 15, wherein the type of the terminal device is used to determine a first type of terminal device and a second type of terminal device, and manners of determining IDs of the first type of terminal device and the second type of terminal device are different.

24. The method according to claim 23, wherein all POs in the first cycle are used to send paging messages to the first type of terminal device and the second type of terminal device, and a PF in which the one or more POs are located is determined based on paging density in the first cycle and the ID of the terminal device.

25. The method according to claim 15, wherein the method further comprises:
determining, by the network device, an identifier of the PEI sent to the terminal device, wherein the identifier of the PEI is used by the terminal device to determine the type of the PEI, and the type of the PEI is used to determine whether the terminal device is to be woken up.

26. The method according to claim 25, wherein the type of the terminal device is used to determine a first type of terminal device and a second type of terminal device, the first type of terminal device corresponds to a first type of PO, the second type of terminal device corresponds to a second type of PO, and the first type of PO and the second type of PO completely overlap or partially overlap.

27. The method according to any one of claims 15 to 26, wherein some or all PFs in the first cycle are consecutive in terms of time resources, and the one or more POs are determined based on time domain positions of the some or all PFs in the first cycle.

28. The method according to claim 27, wherein all PFs in the first cycle are consecutive in terms of time resources, and all the PFs satisfy the following condition: $\left(SFN+{PF}_{offset}\right) mod T = {UE}_{ID} mod N ,$ wherein SFN is a system frame number, *PF_{offset}* represents an offset value of all the PFs in the first cycle, and T represents a paging cycle.

29. A terminal device, comprising:
a determining unit, determining, based on first information, one or more paging occasions POs corresponding to the terminal device in a first cycle,
wherein the first information comprises one or more of following information:
a type of a PO in the first cycle;
a type of the terminal device;
a type of a paging early indication PEI received by the terminal device; and
whether paging frames PFs in the first cycle are consecutive.

30. The terminal device according to claim 29, wherein POs in the first cycle comprises a first type of PO and a second type of PO, and a position of the second type of PO in the first cycle is determined based on a position of the first type of PO.

31. The terminal device according to claim 30, wherein the position of the second type of PO in the first cycle is determined based on the position of the first type of PO and a first offset value.

32. The terminal device according to claim 31, wherein the second type of PO corresponds to a second type of terminal device having a network energy saving NES function, and the first type of PO corresponds to a first type of terminal device having no NES function; and manners of determining identities IDs of the first type of terminal device and the second type of terminal device are the same.

33. The terminal device according to claim 31 or 32, wherein a position *i_{s,NES}* of the second type of PO in any PF in the first cycle is: ${i}_{s , NES} = {PO}_{offset} + floor \left({UE}_{ID}/N\right) mod {N}_{s} ,$ wherein *PO_{offset}* represents the first offset value, *UE_{ID}*represents an ID of the terminal device, *N* represents a quantity of PFs in one cycle, and *Nₛ* represents a quantity of POs in one PF.

34. The terminal device according to claim 30, wherein the first type of PO and the second type of PO are respectively located in different PFs, the first type of PO is located in a first PF, the second type of PO is located in a second PF, and the second PF is one of the following:
one or more PFs other than the first PF in the first cycle; or
a PF in any cycle in a first cycle set,
wherein the first information is further used to indicate whether the first cycle set comprises the first cycle.

35. The terminal device according to claim 34, wherein the first PF comprises a first type of PO located at a first position, and the second PF comprises a second type of PO located at a second position; and a position of the first position in the first PF is the same as a position of the second position in the second PF.

36. The terminal device according to any one of claims 30 to 35, wherein the terminal device has an NES function, and the one or more POs are POs belonging to the second type of PO.

37. The terminal device according to claim 29, wherein the type of the terminal device is used to determine a first type of terminal device and a second type of terminal device, and manners of determining IDs of the first type of terminal device and the second type of terminal device are different.

38. The terminal device according to claim 37, wherein all POs in the first cycle are used to send paging messages to the first type of terminal device and the second type of terminal device, and a PF in which the one or more POs are located is determined based on paging density in the first cycle and the ID of the terminal device.

39. The terminal device according to claim 29, wherein the determining unit is further configured to determine the type of the PEI based on an identifier of the received PEI, wherein the type of the PEI is used to determine whether the terminal device is to be woken up.

40. The terminal device according to claim 39, wherein the type of the terminal device is used to determine a first type of terminal device and a second type of terminal device, the first type of terminal device corresponds to a first type of PO, the second type of terminal device corresponds to a second type of PO, and the first type of PO and the second type of PO completely overlap or partially overlap.

41. The terminal device according to any one of claims 29 to 40, wherein some or all PFs in the first cycle are consecutive in terms of time resources, and the one or more POs are determined based on time domain positions of the some or all PFs in the first cycle.

42. The terminal device according to claim 41, wherein all PFs in the first cycle are consecutive in terms of time resources, and all the PFs satisfy the following condition: $\left(SFN+{PF}_{offset}\right) mod T = {UE}_{ID} mod N ,$ wherein SFN represents a system frame number, *PF_{offset}* represents an offset value of all the PFs in the first cycle, and T represents a paging cycle.

43. A network device, comprising:
a determining unit, determining, based on first information, one or more paging occasions POs corresponding to a terminal device in a first cycle,
wherein the first information comprises one or more of following information:
a type of a PO in the first cycle;
a type of the terminal device;
a type of a paging early indication PEI sent by the network device to the terminal device; and
whether paging frames PFs in the first cycle are consecutive.

44. The network device according to claim 43, wherein POs in the first cycle comprises a first type of PO and a second type of PO, and a position of the second type of PO in the first cycle is determined based on a position of the first type of PO.

45. The network device according to claim 44, wherein the position of the second type of PO in the first cycle is determined based on the position of the first type of PO and a first offset value.

46. The network device according to claim 45, wherein the second type of PO corresponds to a second type of terminal device having a network energy saving NES function, and the first type of PO corresponds to a first type of terminal device having no NES function; and manners of determining identities IDs of the first type of terminal device and the second type of terminal device are the same.

47. The network device according to claim 45 or 46, wherein a position *i_{s,NES}* of the second type of PO in any PF in the first cycle is: ${i}_{s , NES} = {PO}_{offset} + floor \left({UE}_{ID}/N\right) mod {N}_{s} ,$ wherein *PO_{offset}* represents the first offset value, *UE_{ID}*represents an ID of the terminal device, *N* represents a quantity of PFs in one cycle, and *Nₛ* represents a quantity of POs in one PF.

48. The network device according to claim 44, wherein the first type of PO and the second type of PO are respectively located in different PFs, the first type of PO is located in a first PF, the second type of PO is located in a second PF, and the second PF is one of the following:
one or more PFs other than the first PF in the first cycle; or
a PF in any cycle in a first cycle set,
wherein the first information is further used to indicate whether the first cycle set comprises the first cycle.

49. The network device according to claim 48, wherein the first PF comprises a first type of PO located at a first position, and the second PF comprises a second type of PO located at a second position; and a position of the first position in the first PF is the same as a position of the second position in the second PF.

50. The network device according to any one of claims 44 to 49, wherein the terminal device has an NES function, and the one or more POs are POs belonging to the second type of PO.

51. The network device according to claim 43, wherein the type of the terminal device is used to determine a first type of terminal device and a second type of terminal device, and manners of determining IDs of the first type of terminal device and the second type of terminal device are different.

52. The network device according to claim 51, wherein all POs in the first cycle are used to send paging messages to the first type of terminal device and the second type of terminal device, and a PF in which the one or more POs are located is determined based on paging density in the first cycle and the ID of the terminal device.

53. The network device according to claim 43, wherein the determining unit is further configured to determine an identifier of the PEI sent to the terminal device, wherein the identifier of the PEI is used by the terminal device to determine the type of the PEI, and the type of the PEI is used to determine whether the terminal device is to be woken up.

54. The network device according to claim 53, wherein the type of the terminal device is used to determine a first type of terminal device and a second type of terminal device, the first type of terminal device corresponds to a first type of PO, the second type of terminal device corresponds to a second type of PO, and the first type of PO and the second type of PO completely overlap or partially overlap.

55. The network device according to any one of claims 43 to 54, wherein some or all PFs in the first cycle are consecutive in terms of time resources, and the one or more POs are determined based on time domain positions of the some or all PFs in the first cycle.

56. The network device according to claim 55, wherein all PFs in the first cycle are consecutive in terms of time resources, and all the PFs satisfy the following condition: $\left(SFN+{PF}_{offset}\right) mod T = {UE}_{ID} mod N ,$ wherein SFN represents a system frame number, *PF_{offset}* represents an offset value of all the PFs in the first cycle, and T represents a paging cycle.

57. A communication apparatus, comprising a memory and a processor, wherein the memory is configured to store a program, and the processor is configured to invoke the program in the memory to execute the method according to any one of claims 1 to 28.

58. An apparatus, comprising a processor invoking a program from a memory to execute the method according to any one of claims 1 to 28.

59. A chip, comprising a processor configured to invoke a program from a memory, to cause a device installed with the chip to execute the method according to any one of claims 1 to 28.

60. A computer-readable storage medium, wherein a program is stored on the computer-readable storage medium, and the program causes a computer to execute the method according to any one of claims 1 to 28.

61. A computer program product, comprising a program, wherein the program causes a computer to execute the method according to any one of claims 1 to 28.

62. A computer program, wherein the computer program causes a computer to execute the method according to any one of claims 1 to 28.
